# EUROPEAN PATENT APPLICATION

(11) **EP 3 985 966 A1**
(43) Date of publication of application: **20.04.2022**
(21) Application number: 20202086.3
(22) Date of filing: 15.10.2020
(51) Int. Cl.: H04N 9/31, A46B 15/00, A61C 17/22

(54) **A SYSTEM COMPRISING A WEARABLE DEVICE, AND A METHOD OF SPATIALLY STABILIZING DISPLAY INFORMATION UPON OPERATION OF SUCH DEVICE**

(71) Applicant: Koninklijke Philips N.V., 5656 AG Eindhoven (NL)
(72) Inventor: RMAILE, Amir Hussein, 5656 AE Eindhoven (NL); GERHARDT, Lutz Christian, 5656 AE Eindhoven (NL); GOTTENBOS, Bart, 5656 AE Eindhoven (NL); JOHNSON, Mark Thomas, 5656 AE Eindhoven (NL)
(74) Representative: Philips Intellectual Property & Standards

(57) **Abstract**

A system is provided. The system comprises an image projection device (6) configured to project display information; a wearable device (100) which when worn is subjected to spatial movement; and a compensation element (7) configured to adjust the image projection device (6) based on the spatial movement such that the movement of the wearable device (100) is compensated for during projection of the display information by the image projection device (6). Further, a method of spatially stabilizing display information projected by an image projection device (6) upon operation of a wearable device is provided.

## Description

### FIELD OF THE INVENTION

The present invention generally relates to a system, a method of spatially stabilizing display information projected by an image projection device upon operation of a wearable device, and also a non-transitory computer readable storage medium.

### BACKGROUND OF THE INVENTION

It is well known in the art to use electronic wearable devices and especially oral cleaning devices. One way to make the routine of using oral cleaning devices more appealing, more convenient, and more interesting for different consumers or target groups is to display information or entertainment to the user whilst brushing their teeth or while treating the teeth/ gums with a mouthpiece, e.g. using light or ultrasound treatments or even brushing/massage. The displayed information may by way of example, in the context of a tooth brush be real time feedback to coach during brushing, or in the context of a mouthpiece be of entertainment type. While brushing teeth takes a couple minutes, mouthpieces may be used for longer treatment times, e.g. 30 minutes.

The information, no matter type, may be provided via a smartphone or via a fixed display. However, whilst using a mouthpiece or a toothbrush a user is free to move around the bathroom and may well be using their hands for other purposes, such as other bathroom rituals. It is therefore not convenient for the user to either carry a display around or to stay at the position of a fixed display.

It is also well known to provide user feedback in real time via the handle, such as the handle of a toothbrush. However, the handle is not easy to see while brushing, and audible or tactile feedback cannot communicate much information. Displaying coaching or brushing feedback on the wall or another easily visible surface would therefore be preferred over the alternatives.

A problem with beaming information from brushing mouthpieces or power toothbrushes is the vibration of these devices, and for power toothbrushes additionally the user moving and rotating the device. There is hence a need for the provision of an improved user experience in the context of wearable devices, irrespective of whether it refers to provision of real-time information or entertainment during operation thereof.

### SUMMARY OF THE INVENTION

There is hence a need for the provision of an improved user experience in the context of wearable devices, irrespective of whether it refers to provision of real-time information or entertainment during operation thereof.

The solution should not only be applicable to oral care devices per se but to personal care devices or other body worn or body contacted devices as such.

These and other objectives are achieved by providing a system having the features of the independent claim. Preferred embodiments are defined in the dependent claims.

According to a first aspect of the present invention, there is provided a system comprising:
an image projection device configured to project display information;
a wearable device which when worn is subjected to spatial movement; and
a compensation element configured to adjust the image projection device based on the spatial movement such that the movement of the wearable device is compensated for during projection of the display information by the image projection device.

As an advantage of the invention, the operator of the wearable device may be presented with displayed information during operation, where the displayed information may be presented as a stable projection. More precisely, by the compensation element, spatial movement of the wearable device, no matter if it is in the form of a periodical movement or a non-periodical movement may be compensated for by adjusting the image projection device accordingly. In the context of the invention, the term *"periodical movement"* is to be understood as a vibrational movement caused by a driving train forming part of the wearable device, where the vibrational movement has a frequency and an amplitude. Further, in the context of the invention, the term *"non-periodical movement"* is to be understood as a manual movement of the wearable device during operation thereof, which movement may be caused e.g. an angular or twisting movement, e.g. by the operator twisting her wrist during teeth brushing, or by the operator shaking/moving her head while treating the teeth/gums with a mouthpiece.

The system is applicable no matter if the projected display information is a real-time feedback to the operator, or if it is a streamed information stored in a memory.

The display information may be displayed on any surface, no matter if it is a surface external from the wearable device, such as a wall, a ceiling or a holographic 3D display, or a surface forming part of the wearable device, such as a display or a holographic 3D display supported by the wearable device or indeed, via a mirrored surface, on the body of the device user themselves.

The system may comprise a sensor configured to determine spatial movement of the wearable device. The sensor may be configured to determine a vibration frequency of the wearable device.

The compensation element may be configured to modulate the image projection device based on a vibration frequency of the wearable device to thereby spatially stabilize the projected display information. The compensation element may have different operation principles. In one embodiment, the compensation element may be configured to adjust a displayed image in a direction which opposes the vibration direction. This may be made by modulating a deflection mirror. This is applicable e.g. in the event the image projection device is a laser projector. It may also be made by modulating positions of pixels on the screen of an LCD based projector, where the positions of the pixels are modulated at the determined vibration rate.

The compensation element may be configured to modulate the image projection device by mechanically moving the image projection device or a part thereof. Thus, a projector or a deflection mirror may be mechanically moved. In another embodiment, the compensation element may be configured to digitally adapt the pixels of the image projection device, such as the pixels on the screen of an LCD based projector.

In another embodiment, the compensation element may be configured to modulate the image projection device by synchronizing a frame rate of the image projection device with a vibration frequency of the wearable device or with a harmonic of a vibration frequency of the wearable device. By using such a synchronisation, the image will be projected at the same phase as the vibration of the wearable device and will as such be directed in the same direction. Thereby blur may be reduced. In the event of faster type projection devices, like lasers, a new image may be projected with a frame rate exactly corresponding to the frequency of the wearable device. A typical vibration frequency of a toothbrush is about 200 Hz. For less rapid projectors, such as cheap LCDs, the frame rate of the projected image may be at a fraction of the frequency of the wearable device, such as every two brushing strokes in the event of the wearable device being a toothbrush.

The compensating element may be configured to modulate the image projection device with a duty cycle of less than 50%, preferably less than 20%, and more preferably less than 10% of the total operation time. Thus, the image projection device may be operated in a flashing mode which allows reduction of blurring of the displayed information.

The sensor may be a motion sensor comprising one or more of a sensor from the group consisting of an accelerometer, a gyroscope and a rotation sensor. Accordingly, the sensor may be configured to sense a periodical and/or a non-periodical vibration.

In yet another embodiment, the sensor may be an optical sensor. The optical sensor may be used to, based on a camera image of a displayed information, provide a real-time feedback to keep the projected display information stationary by monitoring markers for example at a corner or at an edge of the displayed information.

The image projection device may comprise one or more of an image projector, a laser scanning device, a micro-electro-mechanical system (MEMS) based projection device, a laser diode or a LED. The laser diode may be provided with a scanner, i.e. a movable mirror. In the event of the image projection device being a MEMS based projection device, this may be a digital micromirror device (DMD). The DMD may by way of example by a DMD provided by Texas Instruments which comprises an array of highly reflective micromirrors. Such DMD may be seen as a spatial light modulator.

The image projection device may be supported by the wearable device. In such embodiment, the projected display information may be projected onto a surface separate from the wearable device. Such surface may be a reflecting surface, whereby the projection will be reflected onto the user's body.

The system may further comprise a holographic 3D display and the image projection device may be configured to project the display information onto the holographic 3D display. The holographic 3D display may be supported by the wearable device or be arranged separate from the wearable device. The holographic 3D display may by way of example be used to provide real-time feedback to the user of e.g. brushing performance in the event of the wearable device being a toothbrush. By way of example, areas where the brushing quality could be improved may be visualized.

According to another aspect, a method of spatially stabilizing display information projected by an image projection device upon operation of a wearable device is provided. The method comprises determining spatial movement of the wearable device and adjusting the image projection device based on the determined spatial movement such that the display information projected by the image projection device is spatially stabilized.

The spatial movement may be determined by using a sensor. The sensor may be a motion sensor or an optical sensor.

The advantages of the system as such have been thoroughly discussed above and these advantages are equally applicable to the method of spatially stabilizing display information projected by an image projection device upon operation of a wearable device. To avoid undue repetition reference is made to the previous discussion.

The determining of spatial movement of the wearable device may comprise determining a vibration frequency of the wearable device, and wherein the adjusting of the image projection device comprises synchronizing a frame rate of the image projection device with the vibration frequency of the wearable device or with a harmonic of the vibration frequency of the wearable device.

The image projection device may be adjusted by a compensating element and the compensating element may be configured to modulate the image projection device with a duty cycle of less than 50%, preferably less than 20%, and more preferably less than 10% of a total operation time.

The determining of spatial movement of the wearable device may comprise determining a vibration frequency of the wearable device, and the image projection device may be adjusted by modulating the image projection device based on the determined vibration frequency.

The image projection device may be adjusted by a compensation element configured to mechanically move the image projection device or a part thereof; to digitally adapt pixels of the image projection device; or to synchronize a frame rate of the image projection device with the vibration frequency of the wearable device or with a harmonic of the vibration frequency of the wearable device.

As yet another aspect, the invention refers to a non-transitory computer readable recording medium having computer readable program code recorded thereon which when executed on a device having processing capability is configured to perform the method of the previous aspect. The above-mentioned features of the method, when applicable, apply to this aspect as well. To avoid undue repetition, reference is made to the above.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

These and other aspects of the present invention will now be described in more detail, with reference to the appended drawings showing embodiment(s) of the invention.
Fig. 1 schematically discloses one embodiment of a wearable device in the form of a mouthpiece.
Fig. 2 schematically discloses an embodiment of a wearable device in the form of an electrical toothbrush.
Fig. 3 discloses one embodiment of a wearable device in the form of an electrical toothbrush.
Figs. 3A-3C schematically illustrates three modes of modulation.
Fig. 4 discloses highly schematically one embodiment of a wearable device in the form of an electrical toothbrush with a separate display in the form of a holographic 3D display.
Fig. 5 discloses highly schematically another embodiment of a wearable device in the form of an electrical toothbrush with a display in the form of a holographic 3D display.
Fig. 6 discloses, highly schematically, one embodiment of a wearable device using a passive compensation.
Fig. 7 discloses, highly schematically, one embodiment of a wearable device in the form of a mouthpiece with an extendable display.
Fig. 8 discloses a flow chart of a method of spatially stabilizing display information projected by an image projection device upon operation of a wearable device.

### DETAILED DESCRIPTION

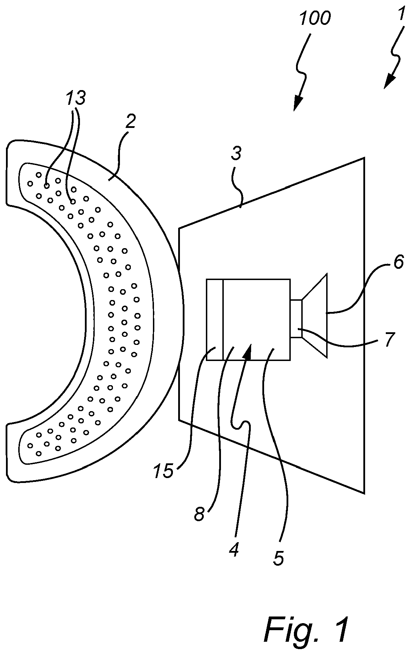

Fig. 1 schematically shows an exemplary wearable device 100 in the form of a brushing mouth piece 1 in which the teaching of the present disclosure may be implemented. A mouthpiece 1 is typically used for longer treatment times for example to whiten teeth or treat gums with light or ultrasound or even for brushing or massaging. It is however to be emphasized that the teaching of the present disclosure may be implemented in other wearable devices 100 as well. The invention is especially suitable for wearable devices used for personal care. Non-limiting examples of personal care devices are oral care devices in the form of brushing mouthpieces, tooth brushes and shaving and grooming devices. The skilled person will also understand that the invention is equally applicable to other wearable devices and especially devices to be worn close to the body, such as gaming equipment.

The mouthpiece 1 which is disclosed highly schematically comprises a first section 2 which during use of the mouthpiece 1 is configured to be inserted into the mouth of a user and a second section 3 which during use is configured to project away from the mouth. In the disclosed embodiment, the first section 2 is embodied as a bite splint having a curvature of the row of teeth. The bite splint comprises bristles 13 or rubber-based cleaning elements which are configured to be moved by a drive train 15 to be discussed below. The first and second sections 2, 3 may be arranged as a unitary body or be arranged as detachable bodies.

The mouthpiece 1 is provided with an information system 4 which comprises an optional sensor 5 which is configured to determine spatial movement of the wearable device 100; an image projection device 6 which is configured to project display information; and a compensation element 7 which is configured to adjust the image projection device 6 based on the spatial movement determined by the sensor 5 such that the movement of the wearable device 100 is compensated for during projection of the display information by the image projection device 6. The information system 4 further comprises a control unit 8.

The skilled person realizes that the sensor 5 may be omitted in the event the wearable device 100 has a known frequency and hence a known spatial movement.

The spatial movement of the mouthpiece 1 may be caused by a drive train 15 comprising one or more moving parts like a motor and a transmission. The drive train 15 causes a vibrational movement having a frequency and an amplitude. Such vibrational movement will in the following be referred to as a *"periodical movement".*

Alternatively, the spatial movement may be caused by manual movement of the wearable device 100 during its operation. A manual movement may be caused e.g. by an angular or twisting movement, e.g. by the user twisting her wrist during teeth brushing, or by the user shaking/moving her head while treating the teeth/gums with the mouthpiece 1. The manual movement causes what will be referred to below as a *"non-periodical movement".*

The sensor 5 may be a motion sensor comprising one or more of a sensor from the group consisting of an accelerometer, a gyroscope and a rotation sensor. The type of sensor 5 to be used may be determined based on what type of movement to sense, thus if it is a periodical or a non-periodical movement. The skilled person will understand that one and the same sensor may be used to determine both a periodical and a non-periodical movement.

It is to be understood that one and the same wearable device 100 may comprise one or more sensors 5 of the same type or a combination of sensors 5 of different types. The sensors 5 may be arranged at different positions of the wearable device 100.

If the movement is a periodical movement, the sensor 5 may by way of example be an accelerometer or a rotation sensor. As given above, one typical example of a periodical movement is a vibration which has a frequency and an amplitude. Thus, in the event of periodical movement, the sensor 5 used should be configured to determine a vibration frequency of the wearable device 100.

If the movement is a non-periodical movement, the sensor 5 may by way of example be a gyroscope or a rotation sensor. As given above, one typical example of a non-periodical movement is the movement of the user's body, such as a head movement or a twisting of the hand holding the wearable device 100.

In yet another embodiment, the sensor 5 may be an optical sensor. The optical sensor may be used to, based on a camera image of a displayed information, provide a real-time feedback to keep the projected display information stationary. This may by way of example be made by monitoring markers at for example a corner or at an edge of the displayed information.

As given above, in some embodiments, where the wearable device 100 has a known frequency during operation, the skilled person realizes that a sensor may be omitted. Instead the device may be configured so that the compensation element 7 is operated at said known frequency.

Now turning to the image projection device 6. The image projection device 6 may be configured to project display information on any surface, no matter if it is a surface external from the wearable device 100, such as a wall, a ceiling or a holographic 3D display, or a surface forming part of the wearable device 100, such as a display or a holographic 3D display supported by the wearable device. In the event the surface forms part of the wearable device, the display information from the image projection device may be reflected to the surface on the wearable device via a reflecting surface such as a bathroom mirror.

The projected display information may be strictly informative, e.g. a pointer indicating areas with certain needs or a timer information. The projected display information may also be of entertaining character, e.g. a movie or a game. It goes without saying that the display information may be a combination of informative and entertaining character. The projected display information may be a real-time feedback to the user during operation of the wearable device 100, a streamed information or information stored in a memory.

The image projection device 6 may by way of example be an image projector, such as an LCD, a laser scanning device, a MEMS based projection device, a laser diode or a LED. The laser diode may be provided with a scanner, i.e. a mirror. The system may comprise a single image projection device 6 or a combination of several image projection devices 6 of the same type or of different types.

The image projection device 6 may as is disclosed in Fig. 1 be supported by the wearable device 100. In such embodiment, the projected display information may be projected onto a surface separate from the wearable device 100. In the event of the wearable device 100 being a mouthpiece it is to be understood that the image projection device 6 preferably is arranged on the second section 3 thereof which during use is intended to extend out from the oral cavity.

As given above, the system comprises a compensation element 7 which is configured to adjust the image projection device 6 based on the spatial movement determined by the sensor 5 such that the movement of the wearable device 100 is compensated for during projection of the display information. The adjustment may be made in a number of ways depending on the type of spatial movement and also the type of image projection device 6 used.

The system further comprises a control unit 8. The control unit 8 is operatively connected to at least the sensor 5, the image projection device 6 and the compensation element 7. The control unit 8 is configured to receive information from the sensor 5 and evaluate if there, based on the information received from the sensor 5, is a need for an adjustment of the image projection device 6 or not. The evaluation is made in view of determined spatial movement as compared to a set acceptable spatial movement. If it is determined that there is a need for compensation, the control unit 8 is configured to instruct the compensation element 7 accordingly to adjust the image projection device 6 based on the spatial movement determined by the sensor 5 such that the spatial movement of the wearable device 100 is compensated for during projection of the display information by the image projection device 6. The skilled person understands that in the event the sensor 5 is omitted and the spatial movement is known beforehand, the control unit 8 is instead configured to instruct the compensation element 7 accordingly to adjust the image projection device 6 based on the known spatial movement.

The communication between the control unit 8, the sensor 5, the image projection device 6 and the compensation element 7 may be wired or wireless or even a combination thereof. In the event of a wireless communication, the communication may be made via Wi-Fi or Bluetooth.

The control unit 8 is accordingly configured to carry out overall control of functions and operations of the system to thereby allow the adjustment of the image projection device 6. The control unit 8 may include a processor, such as a central processing unit (CPU), a microcontroller, or a microprocessor. The processor is configured to execute program code stored in an internal storage device.

The control unit 8 may form part of a non-disclosed circuitry supported by a non-disclosed printed circuitry board, which circuitry further comprises an internal data storage device and a power source. The internal data storage device may be one or more of a buffer, a flash memory, a hard drive, a removable media, a volatile memory, a non-volatile memory, a random access memory (RAM), or another suitable device. In a typical arrangement, the internal data storage device may include a non-volatile memory for long term data storage and a volatile memory that functions as system memory for the control unit 8.

In the following, a number of different embodiments will be described of how the invention may be put to practice.

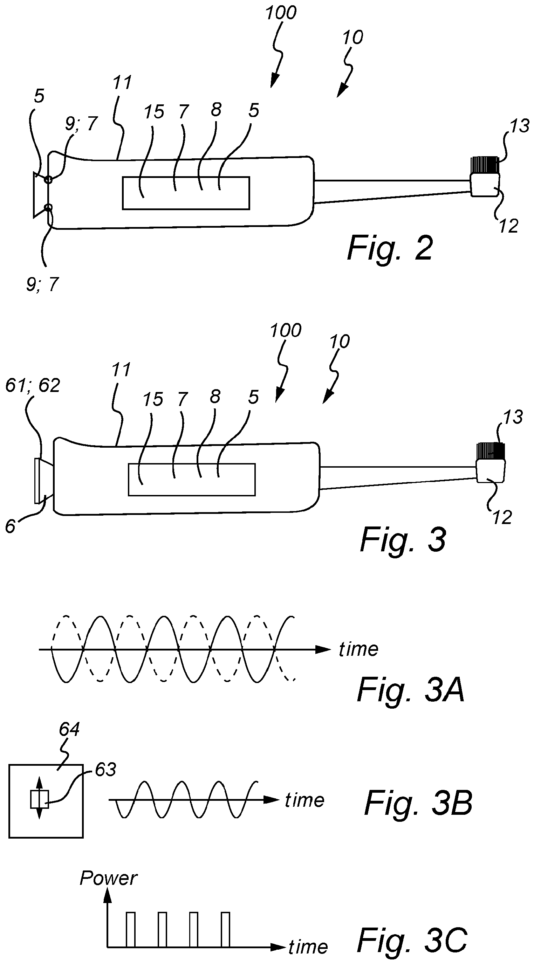

Now turning to Fig. 2, one embodiment of a wearable device 100 in the form of an electrical toothbrush 10 is disclosed. The toothbrush 10 comprises a handle 11 with a drive train 15 and a brush head 12 with bristles 13. The handle 11 supports an image projection device 6 configured to display information, a compensating element 7 and a control unit 8. The image projection device 6 is rotatably supported on the mouthpiece 1 on two, highly schematically disclosed, rotation axes 9 forming a compensation element 7. One or more non-disclosed motors may be connected to the image projection device 6 and/or to the rotation axes 9 to allow actuation of the compensation element 7. The toothbrush 10 further comprises at least one sensor 5. The at least one sensor 5 may be in the form of a gyroscope or an accelerometer, or a combination thereof. The sensor 5 is configured to measure the angular position of the image projection device 6 over time and hence its spatial movement. The sensor 5 is configured to communicate information relating to the measured angular position to the control unit 8. The control unit 8 is configured to determine the angular difference in view of a set value and actuate the compensation element 7 to thereby allow an angular correction by adjusting the image projection device 6. Thereby, any spatial movement determined by the sensor 5 is allowed to be compensated for during projection of the display information by the image projection device 6. The adjustment may be made in real-time. Note that in another, non-disclosed embodiment, the compensation element 7 may be configured to actuate only a part of the image projection device, for example only one projection lens of an image projector, or the relative position of laser diode to a scanner in a laser projector.

Now turning to Fig. 3, one embodiment of a wearable device 100 in the form of an electrical toothbrush 10 is disclosed. The toothbrush 10 comprises a handle 11 with a drive train 15 and a brush head 12 with bristles 13. The handle 11 supports an image projection device 6 configured to display information, a compensating element 7 and a control unit 8. A specific issue of a toothbrush is a high frequency motion associated with the motion of the bristles 13 which is typically at a frequency of about 50-500Hz. Such a frequency, if uncompensated, will result in a blurring of the image displayed by the image projection device 6. However, since such a vibration occurs at a known frequency, the thus caused blurring of the displayed image may be compensated for in one of the following manners. Note that also such a high frequency motion may be present in a brushing mouthpiece device.

In a first embodiment, see Figs. 3 and 3A the displayed image position may be adjusted in a direction which opposes the vibration direction of the brush head 12. In practice this may be made by modulating a deflection mirror 61 or a projection lens 62 of the image projection device 6. The deflection mirror 61 may by way of example be a deflection mirror of a laser projector. The projection lens 62 may be part of an LCD or MEMS image projector. More precisely, the control unit 8 may be configured to set the compensating element 7 to vibrate the deflection mirror 61 or the projection lens 62 by the same frequency and amplitude as the brush head 12 but with a 180 degrees phase shift. Thereby the blurring of image displayed by the image projection device 6 may be substantially eliminated. This may be seen as a mechanical adjustment.

In another embodiment, see Figs. 3 and 3B in the event the image projection device 6 is an LCD or a MEMS based projector, the control unit 8 may be configured to modulate the position of pixels 63 on a screen 64 of the LCD or the MEMS based projector at the vibration rate of the image. More precisely, the control unit 8 may be configured to modulate the positions of the pixels 63 by the same determined frequency and amplitude. Thereby the blurring of an image displayed by the image projection device 6 may be substantially eliminated. In this embodiment the control unit 8 also serves as a compensation element 7. The modulation is hence made digitally. For this to operate efficiently, a fast motion sensor or prior knowledge of the motion for example knowledge of the vibration frequency and a fast image processing is required. Thus, in this specific embodiment, there is, provided the vibration frequency is pre-known, no need for any separate sensor.

In yet another non-illustrated embodiment, the compensation may be made by synchronising a frame rate of the image projection device 6 with the frequency associated with the determined spatial motion. This is made by the control unit 8 being configured to modulate the image projection device 6 by synchronizing the frame rate by the determined frequency. The information will be displayed with the same phase as the determined frequency. Thereby the blurring of the image displayed by the image projection device 6 may be substantially eliminated. The modulation is hence made digitally. This may be useful in the event the image projection device 6 is a projector. Provided the vibration frequency is pre-known, there is no need for any separate sensor.

For image projection devices 6 having a faster projection frequency, such as a laser diode and scanner, the control unit 8, acting as a compensation element 7, may be configured to set the laser diode and scanner to project an image with exactly the same frame rate, i.e. the frequency of the brush head 12, e.g. 200Hz. The modulation is made digitally also in this embodiment. Provided the vibration frequency is pre-known, there is no need for any separate sensor.

In still another non-illustrated embodiment, suitable for image projection devices 6 having a less rapid projection frequency, such as cheap LCDs, the display information may be displayed at a fraction of the frequency of the brush head 12. By way of example, the information may be displayed every second brushing strokes corresponding to a frequency of 100Hz in the event of the brush head 12 having a frequency of 200Hz. Like in the previous embodiments, the control unit 8 acts as the compensating element 7 being configured to adjust the image projection device 6 by modulating the projection frequency. Provided the vibration frequency is pre-known, there is no need for any separate sensor.

In yet another embodiment, see Figs 3 and 3C, being a further development of this example, the blurring of the displayed information may be even better reduced if the control unit 8, acting as a compensating element 7, is configured to operate the image projection device 6 in a flashing mode. In the context of the application, the term *"flashing mode"* should be understood as that the illumination by the image projection device 6 is on only for a relatively small duty cycle, less than 50% and, e.g. preferably less than 20%, more preferably less than 10% of a total operation time or even less; for example 1%. In the event the image projection device 6 being a LED illuminated LCD of a MEMS projector or a laser diode with scanner, the control unit 8 may be set to drive the image projection device 6 at a higher illumination level in a pulsed mode with short duty cycle. Provided the vibration frequency is pre-known, there is no need for any separate sensor.

In still another non-illustrated embodiment, the sensor 5 may be an optical sensor. The optical sensor may be used to, based on a camera image of a displayed information, provide a real-time feedback to the control unit 8 to thereby allow the same to modulate the image projection device 6 and hence keep the projected display information stationary. The optical sensor 5 may be set to monitor movement relative to markers at a corner or at an edge of the displayed information. The control unit 8 will hence act as a compensating element 7 and is configured to receive and prosecute information relating to spatial movement of the wearable device.

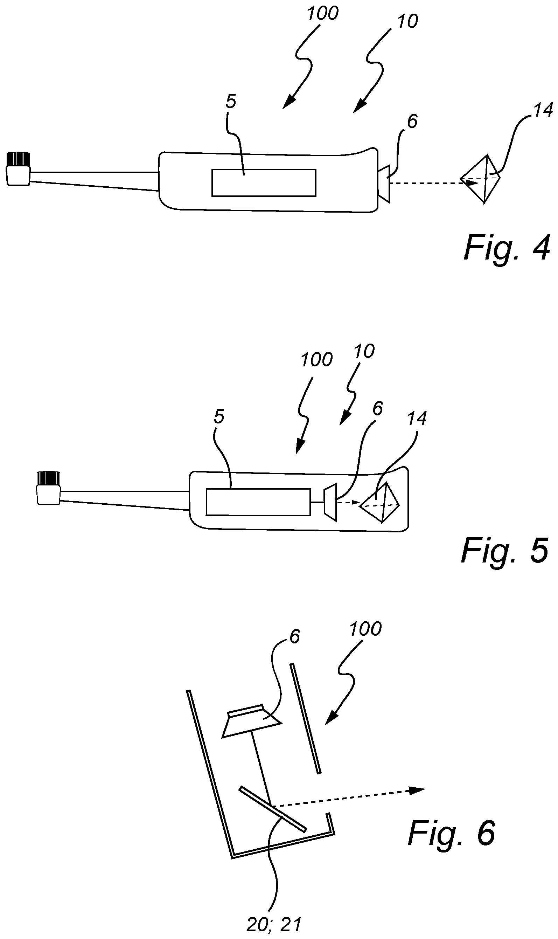

Now turning to Fig. 4, one embodiment of a wearable device 100 in the form of a toothbrush 10 is disclosed. The toothbrush 10 as such has the very same design as that previously discussed in view of Fig. 2. Further, the toothbrush 10 is provided with a system which as such is applicable to any of the embodiments described above to allow the image projection device 6 to be adjusted based on the spatial movement determined by the one or more sensors 5. As a difference to the previous embodiments, this system is additionally provided with a holographic 3D display 14 which in the disclosed embodiment is formed to a holographic reflector pyramid which is arranged separately from the mouthpiece 1. The image projection device 6 which is supported by the toothbrush 10 is configured to project the display information onto the holographic 3D display 14. The holographic 3D display 14 allows the user to perceive a 3D impression from the projected information. Viewings from different angles may be realized without the need for 3D augmentation, such as AR/VR glasses.

The holographic 3D display 14 may by way of example be used to provide real-time feedback to the user. By way of example, areas where the quality, such as the brushing quality, could be improved may be visualized to the user.

In a non-disclosed alternative to the embodiment of Fig. 4, the positions of the image projection device 6 and the holographic 3D display 14 may be shifted. Thus, in such non-disclosed embodiment, the holographic 3D display 14 is supported by the mouthpiece 1 while the image projection device 6 is arranged separately from the mouthpiece 1. Hence, the image projection device 6 may be configured to display information to the display from a remote position. The control unit 8 is preferably configured to communicate with the image projection device 6 in a wireless manner, e.g. via Wi-Fi or Bluetooth. E.g. prior to use of the mouthpiece, oral health or tooth relevant information could be displayed into the device. The advantage of displaying information from a distance (in)to the mouthpiece is that no additional active component is needed in the mouthpiece to project the information, only a passive hologram reflector.

Now turning to Fig. 5 a further embodiment of a wearable device 100 in the form of a toothbrush 10 is disclosed. The toothbrush 10 as such has the very same design as that previously discussed in view of Fig. 2. Further, the toothbrush 10 is provided with a system which as such is applicable to any of the embodiments described above to allow the image projection device 6 to be adjusted based on the spatial movement determined by the one or more sensors 5. As a difference to the previous embodiments, this system is additionally provided with a holographic 3D display 14 which in the disclosed embodiment is formed to a holographic reflector pyramid which is arranged supported by the mouthpiece 1. The image projection device 6 which is also supported by the toothbrush 10 is configured to project the display information onto the holographic 3D display 14. The holographic 3D display 14 may be releasably attachable in form of an extendable display. Such extendable display enables focusing on a larger distance beyond the near point, i.e. the minimum distance from the eye at which a person is able to see objects in focus. This distance is typically about 6.5 cm.

Now turning to Fig. 6, one embodiment of a passive compensation will be presented highly schematically as implemented in a handle portion of a wearable device 100. A wearable device 100 in the form of an oral care device is typically in use oriented slightly downwards thereby forming an angle to the horizontal axis, and hence off eye axis. This means that display information projected by an image projection device 6 which is supported by the wearable device 100, automatically will be aligned with the axial orientation of the wearable device 100. To compensate for this, an optional optical element 20 may be arranged in front, i.e. downstream, of the image projection device 6. The optical element 20 may be formed by a direction turning film 21 which by reflection changes the angular direction of the projected display information to better conform to the eye axis. Hence a passive angular compensation of the beamed information may be provided for. This feature is applicable in all embodiments disclosed and discussed above. Also, this feature is applicable no matter if the wearable device is for oral use or not.

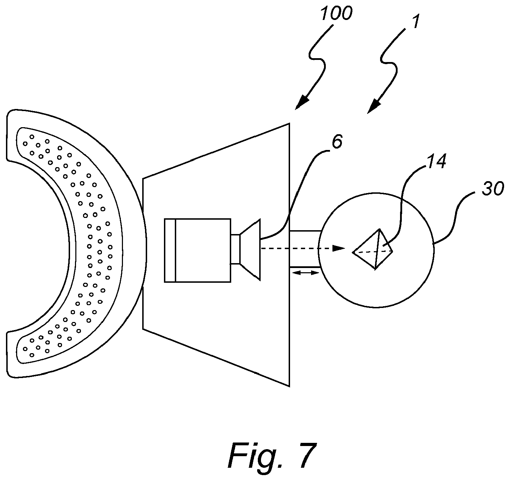

Now turning to Fig. 7, one embodiment of a wearable device 100 in the form of a mouthpiece 1 comprising an extendable display 30 is disclosed. The extension may by way of example be telescopically arranged. The extendable display 30 is exemplified as a holographic 3D display 14. The mouthpiece 1 as such has the very same design as that previously discussed in view of Fig. 1. Further, the mouthpiece 1 is provided with a system which as such is applicable to any of the embodiments described above to allow the image projection device 6 to be adjusted based on the spatial movement. As given above, the extendable display 30 enables focusing on a larger distance beyond the near point, i.e. the minimum distance from the eye at which a person is able to see objects in focus. The extendable display 30 may be either fully integrated in the mouthpiece 1 or be releasably attachable. If the extendable display is releasably attachable, it can either contain both the image projection device and the projection surface, i.e. the display, or just the display alone whereas the image projection device may be part of the handle of the wearable device.

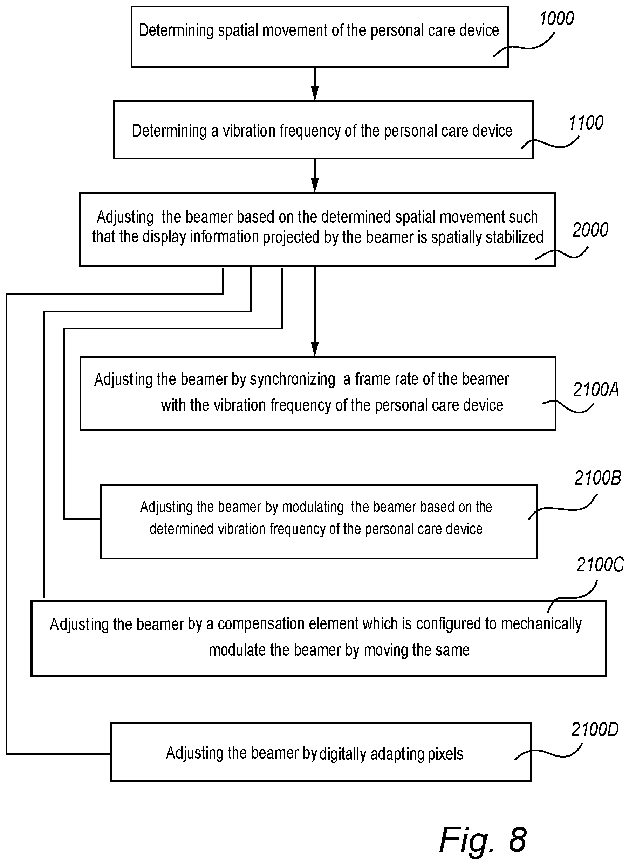

Now turning to Fig. 8, the invention and its operation may be described in the terms of a method of spatially stabilizing display information projected by an image projection device 6 upon operation of a wearable device 100. The method comprises the following acts:
Determining 1000 spatial movement of the wearable device 100.

The spatial movement of the wearable device may in one embodiment be determined by determining 1100 a vibration frequency of the wearable device 100. The vibration frequency may either be pre-known and thus retracted from an internal storage device or be determined by one or more sensors 5.

Adjusting 2000 the image projection device 6 based on the determined spatial movement such that the display information projected by the image projection device 6 is spatially stabilized. As given above in the context of different exemplified embodiments of the device, the adjustment many be accomplished in a number of ways.

Based on this information, the image projection device 6 may be adjusted by synchronizing 2100A a frame rate of the image projection device 6 with the vibration frequency of the wearable device 100 or with a harmonic of the vibration frequency of the wearable device 100. The synchronization may be made by digitally causing a phase shift.

The image projection device may be adjusted by a compensation element 7 which is configured to modulate the image projection device 6 with a duty cycle of less than 50%, preferably less than 20% and more preferably less than 10% of a total operation time.

In another embodiment, the determining 1000 of spatial movement of the wearable device 100 may comprise determining a vibration frequency of the wearable device 100, and wherein the image projection device 6 is adjusted by modulating 2100B the image projection device 6 based on the determined vibration frequency of the wearable device 100.

In yet another embodiment, the image projection device 6 may be adjusted by a compensation element 7 which is configured to mechanically 2100C modulate the image projection device or part thereof by moving the same; or to digitally adapt pixels 2100D of the image projection device.

According to yet another aspect, a non-transitory computer readable recording medium is provided. The non-transitory computer readable recording medium has a computer readable program code recorded thereon which when executed on a device having processing capability is configured to perform the method as presented above.

The person skilled in the art realizes that the present invention by no means is limited to the preferred embodiments described above. On the contrary, many modifications and variations are possible within the scope of the appended claims.

The image projection device may be any type of image projection device configured to project information. One and the same wearable device may be provided with image projection devices of different types. In one non-limiting example, the device may be provided with one projector and one or more laser diodes with scanners. Different types of information may be displayed separately or simultaneously. The two or more image projection devices may be arranged in different positions on the device and under different angles.

In the event the image projection device is provided as one or more laser diodes, these diodes may be combined with movable mirrors - earlier referred to as scanners - thereby allowing displaying variable patterns constituting informative content or entertaining content. The movable mirrors may be part of a MEMS such as a digital micromirror device (DMD). One such DMD provided by Texas Instruments comprises an array of highly reflective micromirrors. The DMD may be seen as a spatial light modulator.

The wearable device may be provided with a supplementary non-disclosed passive vibration damper, such as one or more springs. Thus, while the compensation element provides for an active compensation, the spring(s) may provide a passive dampening.

The obvious target for the displayed information may be a wall or ceiling. However, many people often brush their teeth in front to a mirror. Projecting on a mirror is not feasible, but in the mirror people can look at their face, which may enable highly intuitive feedback by projecting for example brushing information on the cheeks, e.g. a red laser pointing to areas which did not receive sufficient cleaning and a green laser showing well cleaned areas. The pointing, i.e. the projection may be directly from the handle and may be combined with a face recognition sensor to point to the correct positions.

## Claims

1. A system comprising:
an image projection device (6) configured to project display information;
a wearable device (100) which when worn is subjected to spatial movement; and
a compensation element (7) configured to adjust the image projection device (6) based on the spatial movement such that the movement of the wearable device (100) is compensated for during projection of the display information by the image projection device (6).

2. The system according to claim 1 further comprising a sensor (5) configured to determine spatial movement of the wearable device (100).

3. The system according to claim 1 or 2, wherein the compensation element (7) is configured to modulate the image projection device (6) based on a vibration frequency of the wearable device (100) to thereby spatially stabilize the projected display information.

4. The system according to claim 1, wherein the compensation element (7) is configured to modulate the image projection device (6) by mechanically moving the image projection device (6) or a part thereof by digitally adapting pixels (62) of the image projection device (6).

5. The system according to claim 1, wherein the compensation element (7) is configured to modulate the image projection device (6) by synchronizing a frame rate of the image projection device (6) with a vibration frequency of the wearable device (100) or with a harmonic of a vibration frequency of the wearable device (100).

6. The system according to claim 5, wherein the compensating element (7) is configured to modulate the image projection device (6) with a duty cycle of less than 50%, preferably less than 20%, more preferably less than 10% of a total operation time.

7. The system according to any of claims 2-6, wherein the sensor (5) is a motion sensor comprising one or more of a sensor from the group consisting of an accelerometer, a gyroscope and a rotation sensor.

8. The system according to any of claims 2-6, wherein the sensor (5) is an optical sensor.

9. The system according to any of the preceding claims, wherein the image projection device (6) comprises one or more of an image projector, a laser scanning device, a MEMS based projection device, a laser diode and a LED.

10. The system according to any of the preceding claims, wherein the system further comprises a holographic 3D display (14) and wherein the image projection device (6) is configured to project the display information onto the holographic 3D display (14).

11. A method of spatially stabilizing display information projected by an image projection device (6) upon operation of a wearable device (100), comprising:
determining (1000) spatial movement of the wearable device (100); and
adjusting (2000) the image projection device (6) based on the determined spatial movement such that the display information projected by the image projection device (6) is spatially stabilized.

12. The method of claim 11, wherein the determining (1000) of spatial movement of the wearable device comprises determining a vibration frequency (1100) of the wearable device (100), and wherein the adjusting of the image projection device (6) comprises synchronizing a frame rate (2100A) of the image projection device (6) with the vibration frequency of the wearable device (100) or with a harmonic of the vibration frequency of the wearable device (100).

13. The method of claim 11, wherein the image projection device (6) is adjusted by a compensation element (7) and wherein the compensating element (7) is configured to modulate the image projection device (6) with a duty cycle of less than 50%, preferably less than 20%, and more preferably less than 10% of a total operation time.

14. The method of claim 11, wherein the determining (1000) of spatial movement of the wearable device (100) comprises determining a vibration frequency (1100) of the wearable device (100), and wherein the image projection device (6) is adjusted by modulating the image projection device based on the determined vibration frequency.

15. The method of claim 14, wherein the image projection device (6) is adjusted by a compensation element (7) configured to mechanically (2100C) move the image projection device (6) or a part thereof; to digitally (2100D) adapt pixels of the image projection device (6); or to synchronize a frame rate (2100A) of the image projection device (6) with the vibration frequency of the wearable device (100) or with a harmonic of the vibration frequency of the wearable device (100).

16. A non-transitory computer readable recording medium having computer readable program code recorded thereon which when executed on a device having processing capability is configured to perform the method of any of claims 11-15.
